# EUROPÄISCHE PATENTSCHRIFT

(11) **EP 2 996 007 B1**
(45) Veröffentlichungstag und Bekanntmachung des Hinweises auf die Patenterteilung: **08.01.2020**
(21) Anmeldenummer: 15181187.4
(22) Anmeldetag: 17.08.2015
(51) Int. Cl.: G05D 1/02, A47L 9/28

(54) **VERFAHREN ZUM BETRIEB EINES HAUSHALTSGERÄTESYSTEMS**
METHOD FOR OPERATING A HOUSEHOLD DEVICE SYSTEM
PROCEDE DESTINE AU FONCTIONNEMENT D'UN SYSTEME D'APPAREIL MENAGER

(30) Priorität: 10.09.2014 DE 102014113040
(43) Veröffentlichungstag der Anmeldung: 16.03.2016
(73) Patentinhaber: Miele & Cie. KG, 33332 Gütersloh (DE)
(72) Erfinder: Langhammer, Nils, 33415 Verl (DE); Laube, Friedrich, 33334 Gütersloh (DE); Kersting, André, 59329 Wadersloh (DE); Benner, Florian, 59425 Unna (DE); Merkel, Lars, 33428 Harsewinkel (DE)

(56) Entgegenhaltungen:
- US-A1- 2008 105 134
- US-A1- 2014 166 047

## Beschreibung

Die Erfindung betrifft ein Verfahren zum Betrieb eines Haushaltsgerätesystems, nämlich eines zumindest ein ortsfestes Haushaltsgerät und ein mobiles Haushaltsgerät umfassenden Haushaltsgerätesystems, wobei das mobile Haushaltsgerät zum Senden und/oder Empfangen von Daten auf leitungslosem Wege eingerichtet ist.

Die Nutzung einer leitungslosen Kommunikation mit einem mobilen Haushaltsgerät in Form eines Saugroboters ist zum Beispiel aus der EP 2 384 680 A bekannt. Dort wird eine von einem Benutzer mitführbare, batteriebetriebene Bedieneinrichtung nach Art einer Fernbedienung vorgeschlagen, mittels derer bestimmte Statusinformationen, wie zum Beispiel die Betriebsdauer des Saugroboters oder die Anzahl der Filterreinigungszyklen, aber auch ein Ladezustand der vom Saugroboter mitgeführten Akkus, abgefragt und angezeigt werden können. In der US 2002/0060542 A wird die Verwendung eines handelsüblichen Personalcomputers als Schnittstelle für eine leitungslose Kommunikation mit einem Saugroboter vorgeschlagen, so dass der Saugroboter im Ergebnis über das Internet bedienbar sein soll, an das der Personalcomputer angeschlossen ist.

In der US 6,459,955 B wird ein Ansatz beschrieben, mit dem eine Positionsbestimmung eines Saugroboters in einem Raum mittels in dem Raum befindlicher Signalquellen möglich sein soll, wobei die Signalquellen dauerhaft ein Funksignal abstrahlen, welches der Saugroboter mittels einer beweglichen Antenne empfängt und daraufhin anhand der jeweiligen Antennenposition eine Winkelposition zu jeweils einer Signalquelle ermittelt.

Aus der US 2008/0105134 A1 ist ein Hausgerätenetzwerk bekannt, umfassend ein Hausgerät zur Zubereitung eines Lebensmittels und ein Garsensorzubehör in Kommunikation damit, wobei das Garsensorzubehör einen Zustand des Lebensmittels, des Garsensorzubehörs und des Hausgeräts erfassen kann.

Aus der US 2014/0166047 A1 ist ein Saugroboter bekannt, der Bilder von der Oberfläche aufnehmen kann, auf der er sich bewegt. Die Auswertung der Bilder kann an einem stationären Gerät erfolgen, mit dem der Saugroboter drahtlose verbunden ist.

Bei dem genannten Stand der Technik ist jeweils zumindest ein zusätzliches Gerät (Bedieneinrichtung, Personalcomputer, dauerhaft sendende Signalquellen) erforderlich, um mit dem Saugroboter in Kontakt zu treten oder damit der Saugroboter Funktionen wie eine Navigation im Raum durchführen kann.

Eine Aufgabe der Erfindung besteht ausgehend von diesem Stand der Technik darin, eine besonders einfache Möglichkeit zur Nutzung einer drahtlosen Kommunikation mit einem mobilen Haushaltsgerät, wie zum Beispiel einem Saugroboter, anzugeben.

Die Aufgabe wird erfindungsgemäß mit einem Verfahren gemäß Anspruch 1 sowie mit einem Hausgerätenetzwerk gemäß Anspruch 8 gelöst.

Der Vorteil der Erfindung besteht darin, dass in einem Haushalt normalerweise ohnehin vorhandene Geräte, nämlich Haushaltsgeräte und konkret ortsfeste Haushaltsgeräte, wie Herde, Kühlschränke, Kochfelder, Waschmaschinen, Wäschetrockner und dergleichen, für eine leitungslose Kommunikation mit dem mobilen Haushaltsgerät, also zum Beispiel einem Saugroboter, verwendbar werden. Ein zusätzliches Gerät oder gar eine Mehrzahl zusätzlicher Geräte ist bzw. sind damit nicht mehr erforderlich. Dies bedeutet zum einen eine Kostenreduktion, bedingt insgesamt aber auch Einsparung von Rohstoffen und bedeutet eine Erleichterung für den Benutzer des mobilen Haushaltsgeräts, der eine bisher zum Beispiel zum Abfragen einer Statusinformation des Saugroboters benötigte Fernbedienung nicht mehr verlieren oder verlegen kann.

Vorteilhafte Ausgestaltungen und Weiterbildungen der Erfindung ergeben sich aus den nachfolgenden Unteransprüchen. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Die nachfolgende Beschreibung wird im Interesse einer besseren Lesbarkeit, aber ohne Verzicht auf eine weitergehende Allgemeingültigkeit, am Beispiel eines Saugroboters als mobilem Haushaltsgerät fortgesetzt. Entsprechend ist bei jeder Erwähnung eines Saugroboters der allgemeine Begriff "mobiles Haushaltsgerät" mitzulesen. Als weitere Ausführungsform eines solchen mobilen Haushaltsgeräts seien hier lediglich exemplarisch ein herkömmlicher Staubsauger, also zum Beispiel ein Staubsauger in Form eines Bodenstaubsaugers oder dergleichen, oder auch ein sogenannter Haushaltsroboter genannt.

Hinsichtlich der zwischen dem Saugroboter und zumindest einem ortsfesten Haushaltsgerät austauschbaren Daten kommen vielfältige Möglichkeiten in Betracht, von denen einige nachfolgend exemplarisch erörtert werden.

Demgemäß ist bei einer Ausführungsform des Betriebsverfahrens vorgesehen, dass das zumindest eine ortsfeste Haushaltsgerät oder eines der ortsfesten Haushaltsgeräte des Haushaltsgerätesystems als Benutzerschnittstelle für den Saugroboter fungiert. Beim Saugroboter sind dann Elemente und Vorrichtungen, die üblicherweise als Benutzerschnittstelle verwendet werden, nicht erforderlich. Dies verringert die Material- und Herstellungskosten des Saugroboters und im Weiteren reduziert sich aufgrund nicht vorhandener, bisher notwendiger Elemente, Vorrichtungen und/oder Funktionen der Wartungsbedarf des Saugroboters.

Bei einer speziellen Ausführungsform des Betriebsverfahrens, bei dem ein ortsfestes Haushaltsgerät als Benutzerschnittstelle für den Saugroboter fungiert, sendet der Saugroboter zumindest eine Statusinformation im Wege einer leitungslosen Kommunikation an das ortsfeste Haushaltsgerät und das ortsfeste Haushaltsgerät gibt die empfangene Statusinformation mittels einer von dem ortsfesten Haushaltsgerät umfassten Anzeigeeinrichtung aus. Auf Seiten des Saugroboters werden auf diese Weise Anzeigeelemente und dergleichen entbehrlich. Zudem lassen sich, wenn das ortsfeste Haushaltsgerät über eine Anzeigeeinrichtung in Form eines Bildschirms oder eines Displays verfügt, erweiterte Statusinformationen oder Statusinformationen mit einem zusätzlichen Informationsgehalt ausgeben. Exemplarisch kann dazu darauf verwiesen werden, dass ein Saugroboter bisher üblicherweise über eine Anzeigeeinrichtung in Form einer LED oder einer LCD-Anzeige verfügt, um einen niedrigen Ladezustand des von dem Saugroboter mitgeführten Akkus anzuzeigen, und/oder über eine Anzeigeeinrichtung in Form einer LED oder einer LCD-Anzeige zur Füllgradanzeige verfügt. Eine solche oder eine vergleichbare Anzeigeeinrichtung ist nun auf Seiten des Saugroboters nicht mehr notwendig. Die Ladezustands- und/oder Füllgradanzeige sowie die Anzeige weiterer Statusinformationen kann mittels der von dem ortsfesten Haushaltsgerät umfassten Anzeigeeinrichtung erfolgen. Die Ladezustands- und Füllgradanzeige kann dabei als erweiterte Statusinformation zum Beispiel gleichzeitig erfolgen, so dass der Benutzer mehrere Informationen mit einem Blick erfassen kann. Die Ladezustands- und/oder Füllgradanzeige auf der Anzeigeeinrichtung des ortsfesten Haushaltsgeräts kann darüber hinaus zusätzliche Informationen umfassen, wie zum Beispiel eine prognostizierte Restlaufzeit auf Basis des Ladezustands und/oder eine prognostizierte mögliche verbleibende Betriebsdauer auf Basis eines Füllgrads des Staubbeutels oder Staubsammelbehälters.

Weitere mögliche Statusinformationen, die auf diesem Wege einem Benutzer des Saugroboters einfach zugänglich gemacht werden können, ohne dabei den Saugroboter durch eine leistungsfähige Anzeigeeinrichtung, die beim Betrieb des Saugroboters auch beschädigt werden kann, zu verteuern, sind
- eine Anzeige eines Reinigungsfortschritts, zum Beispiel in Form einer prozentualen Angabe pro Raum oder bezogen auf den gesamten Wohnraum,
- eine Restzeitanzeige bis zum Abschluss der Reinigung eines Raums oder des gesamten Wohnraums,
- weitere Informationen zum Akkuzustand, wie zum Beispiel eine voraussichtliche Restlebensdauer des Akkus,

- Alarmmeldungen, wie zum Beispiel ein Festhängen des Saugroboters, insbesondere eine durch eine Ortsinformation, wie zum Beispiel einen vorgegebenen Raumnamen spezifizierte Alarmmeldung zum Festhängen des Saugroboters sowie
- Wartungs- und/oder Serviceinformationen, wie zum Beispiel ein Hinweis auf eine Notwendigkeit zur Reinigung oder zum Austausch bestimmter Teile des Saugroboters.

Neben den erweiterten Möglichkeiten zur Darstellung von Statusinformationen hat die Verwendung einer Anzeigeeinrichtung eines ortsfesten Haushaltsgeräts zur Darstellung von Statusinformationen des Saugroboters darüber hinaus auch den Vorteil, dass sich der Benutzer nicht zum Saugroboter begeben und zum Saugroboter bücken oder den Saugroboter anheben muss. Darüber hinaus kann der Saugroboter während des Abrufs und der Anzeige einzelner oder mehrerer Statusinformationen in Betrieb bleiben und einen Saugvorgang fortsetzen oder in der Ladestation verbleiben, zum Beispiel um einen Aufladevorgang des Akkus fortzusetzen oder abzuschließen.

Bei einer weiteren oder alternativen Ausführungsform des Betriebsverfahrens, bei dem ein ortsfestes Haushaltsgerät als Benutzerschnittstelle für den Saugroboter fungiert, werden mittels eines von dem ortsfesten Haushaltsgerät umfassten Bedienelements eine Bedienhandlung eines Benutzers erfasst und mittels des ortsfesten Haushaltsgeräts eine in Bezug auf die Bedienhandlung automatisch generierte Steuerinformation auf leitungslosem Wege an das mobile Haushaltsgerät gesendet.

Der Saugroboter wird auf diese Weise mittels eines ortsfesten Haushaltsgeräts und eines davon umfassten Bedienelements oder einer Mehrzahl davon umfasster Bedienelemente bedienbar und/oder konfigurierbar, ohne dass sich der Benutzer zum Saugroboter begeben und zum Saugroboter bücken oder den Saugroboter anheben muss. Darüber hinaus kann der Saugroboter während eines solchen Bedienvorgangs in Betrieb bleiben und seine Bewegung, also zum Beispiel einen Saugvorgang, fortsetzen oder in der Ladestation verbleiben, zum Beispiel um einen Aufladevorgang des Akkus fortzusetzen oder abzuschließen.

Bei einer solchen Konfiguration des Saugroboters mittels leitungslos übermittelter Daten kommt zum Beispiel in Betracht, Reinigungszeiten, eine Reinigungsreihenfolge oder ein Reinigungsverhalten und dergleichen festzulegen. Bei einer Bedienung des Saugroboters mittels leitungslos übermittelter Daten ist zum Beispiel die Reinigung eines bestimmten Raumes oder die Reinigung eines gesamten Reinigungsbereichs abrufbar. Zusätzlich kann der Benutzer einen sogenannten spot clean, also das gezielte Anfahren einer bestimmten Reinigungsposition, aktivieren. Ganz allgemein ist mit einer Bedienung des Saugroboters mittels leitungslos übermittelter Daten eine Fernsteuerung des Saugroboters in jeglicher Hinsicht möglich.

Bei einer weiteren Ausführungsform des Betriebsverfahrens, bei dem der Saugroboter mit zumindest einem ortsfesten Haushaltsgerät auf leitungslosem Wege Daten austauscht, ist vorgesehen, dass das zumindest eine ortsfeste Haushaltsgerät oder ein ortsfestes Haushaltsgerät des Haushaltsgerätesystems als Gateway und/oder Kommunikationsinfrastruktur für den Saugroboter fungiert. Die ortsfesten Haushaltsgeräte und der Saugroboter verfügen hierzu über entsprechende Vernetzungstechnologien. Beispiele hierfür sind IPv4/IPv6-Routingfähigkeiten oder sogenannte meshed networking Technologien, wie zum Beispiel ZigBee.

Wenn zumindest ein ortsfestes Haushaltsgerät des Haushaltsgerätesystems und der Saugroboter zum leitungslosen Senden und Empfangen von Daten eingerichtet sind, insbesondere wenn das ortsfeste Haushaltsgerät als Gateway für den Saugroboter fungiert, können verschiedene Service- und Fernwartungsfunktionen über das ortsfeste Haushaltsgerät beim Saugroboter durchgeführt werden. Beispielsweise kann über das ortsfeste Haushaltsgerät ein Software-Update beim Saugroboter eingespielt werden. Zudem kann der Saugroboter Ergebnisse einer Selbstdiagnose an das ortsfeste Haushaltsgerät melden, welches dann selbst oder mittels Zugriff auf einen zum Beispiel im Internet erreichbaren Server dem Benutzer des Saugroboters eine Lösungsmöglichkeit oder ein weiteres Vorgehen vorschlägt. Darüber hinaus oder alternativ ist auf diesem Wege auch eine zusätzliche Bereitstellung von neuen Reinigungs- oder Spezialprogrammen im Speicher des Saugroboters möglich, zum Beispiel ein von einem Teppichhersteller für dessen Teppiche bereitgestelltes Reinigungsprogramm.

Bei einer weiteren Ausführungsform des Betriebsverfahrens, bei dem der Saugroboter mit zumindest einem ortsfesten Haushaltsgerät auf leitungslosem Wege Daten austauscht, ist vorgesehen, dass das mobile Haushaltsgerät eine Positionsbestimmung mittels der von mindestens drei ortsfesten Haushaltsgeräten leitungslos empfangenen Daten durchführt. Bei den zur Positionsbestimmung empfangenen Daten kann es sich um Daten handeln, die zusammen mit oder parallel zu sonstigen Nutzdaten, zum Beispiel Steuerinformationen, übertragen werden. Die Positionsbestimmung erfolgt dann zum Beispiel anhand von Laufzeitmessungen oder einer Auswertung von Empfangssignalstärken. Zeitwerte als Basis für eine Laufzeitmessung oder die Empfangsstärke werden dabei während eines Empfangs einer Präambel eines die Daten umfassenden Datenpakets bestimmt. Dieser Ansatz ist mit einer Vielzahl von verfügbaren Kurzstrecken-Funktechnologien, zum Beispiel WLAN, Bluetooth oder IEEE 802.15.4/ ZigBee, realisierbar.

Bei einer nochmals weiteren Ausführungsform des Betriebsverfahrens, bei dem der Saugroboter mit zumindest einem ortsfesten Haushaltsgerät auf leitungslosem Wege Daten austauscht, ist vorgesehen, dass das mobile Haushaltsgerät mit zumindest einem davon umfassten Sensor, insbesondere einem Temperatur- und/oder Feuchtigkeitssensor, seine Umgebung überwacht und anhand der von dem Sensor erhaltenen Daten zum Beispiel ein ortsfestes Haushaltsgerät abschaltet, indem diesem ein Abschaltsignal übermittelt wird, oder einen Benutzer des Saugroboters über eine erkannte Ausnahmesituation informiert. Im Falle eines als Feuchtigkeitssensor ausgeführten Sensors kann der Saugroboter zum Beispiel einen Wasseraustritt aus einem Waschautomaten detektieren. Der Sensor liefert beim Betrieb des Saugroboters fortwährend ein Sensorsignal. Sobald das Sensorsignal einen vorgegebenen oder vorgebbaren Schwellwert überschreitet, deutet dies auf Wasser im Bewegungsbereich des Saugroboters hin. Dann kann der Saugroboter mittels der kommunikativen Verbindung zu dem Waschautomaten diesen zum Beispiel abschalten. Dafür ist der Feuchtigkeitssensor in einer Konfiguration des Saugroboters dem Waschautomaten zugeordnet, so dass der Saugroboter selbsttätig anhand einer jeweiligen Schwellwertüberschreitung und einer solchen Zuordnung das jeweils anzusteuernde ortsfeste Haushaltsgerät ermitteln kann.

Darüber hinaus kann die Überwachung des Sensorsignals in Bezug auf einen Schwellwert mit einer Plausibilitätsprüfung verknüpft sein. Dann führt die Überschreitung des Schwellwerts zum Beispiel nur dann zu einer Abschaltung des Waschautomaten, wenn sich der Saugroboter zum Zeitpunkt der Schwellwertüberschreitung in der Nähe des Waschautomaten (oder des mit dem Sensorsignal verknüpften Haushaltsgeräts) befindet. Der Abstand zum Haushaltsgerät oder zu allen Haushaltsgeräten wird regelmäßig automatisch durch den Saugroboter ermittelt. Ob sich der Saugroboter also zum Zeitpunkt der Schwellwertüberschreitung in einer solchen Nähe zum Waschautomaten befunden hat, bei der das Sensorsignal plausibel auf einen Wasseraustritt beim Waschautomaten zurückgeführt werden kann, ist dann automatisch auf Seiten des Saugroboters abprüfbar. Dafür wird überprüft, ob der ermittelte Abstand zu dem Haushaltsgerät kleiner als ein vorgegebener oder vorgebbarer Abstandsgrenzwert ist. Die Abschaltung des Haushaltsgeräts oder eine sonstige Aktion in Bezug auf das Haushaltsgerät wird nur dann ausgelöst, wenn beide Bedingungen (Schwellwertüberschreitung, Abstandsgrenzwertunterschreitung) erfüllt sind. Die Konfiguration des Saugroboters umfasst dafür in zumindest einer Speicherzelle den ggf. durch den Benutzer anpassbaren Abstandsgrenzwert oder jeweils einen einem Haushaltsgerät zugeordneten Sensor, weil zum Beispiel bei einem Waschautomaten im Fehlerfall mit einem Wasseraustritt in einem größeren Umfang zu rechnen ist als bei einem Kühlschrank.

Zusätzlich oder alternativ ist bei einer solchen, gegebenenfalls durch eine Plausibilitätskontrolle unterstützten automatischen Überwachung einzelner oder aller Haushaltsgeräte durch den Saugroboter bei einer besonderen Ausführungsform auch vorgesehen, dass im Falle einer anhand einer Schwellwertüberschreitung erkannten Ausnahmesituation automatisch auf Seiten des Saugroboters eine Nachricht generiert wird, die zum Beispiel mittels der oben erwähnten Gateway-Funktionalität an ein Mobiltelefon oder dergleichen des Benutzers übermittelt wird und/oder dass die Nachricht mittels einzelner oder aller Anzeigeeinrichtungen der von dem Haushaltsgerätesystem umfassten ortsfesten Haushaltsgeräte angezeigt wird, so dass der Benutzer zeitnah über die Ausnahmesituation informiert wird.

Insgesamt ist die Erfindung damit auch ein mobiles Haushaltsgerät, zum Beispiel ein mobiles Haushaltsgerät in Form eines Saugroboters, mit Mitteln zur Ausführung des hier und im Folgenden beschriebenen Verfahrens sowie ein ortsfestes Haushaltgerät mit solchen Mitteln und ein Haushaltsgerätesystem mit solchen Haushaltsgeräten. Bei den Mitteln zur Ausführung des Verfahrens handelt es sich zum Beispiel um eine Steuereinheit mit einem Mikroprozessor oder dergleichen sowie einen Speicher, in den ein mittels des Mikroprozessors ausführbares Steuerprogramm geladen ist, das eine Implementierung der jeweiligen Verfahrensschritte in Software umfasst. Damit ist die Erfindung auch ein Computerprogramm, nämlich ein solches Steuerprogramm, mit maschinenlesbarem Programmcodeanweisungen und ein Datenträger, auf dem ein solches Computerprogramm/Steuerprogramm gespeichert ist.

Ein Ausführungsbeispiel der Erfindung ist in den Zeichnungen rein schematisch dargestellt und wird nachfolgend näher beschrieben. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung durchaus auch Änderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand führen.

Es zeigen
- Figur 1: ein Haushaltsgerätesystem mit mehreren ortsfesten Haushaltsgeräten und einem mobilen Haushaltsgerät und
- Figur 2: ein Anwendungsszenario für ein Haushaltsgerätesystem, bei dem das mobile Haushaltsgerät mit einzelnen ortsfesten Haushaltsgeräten leitungslos kommunikativ verbunden ist.

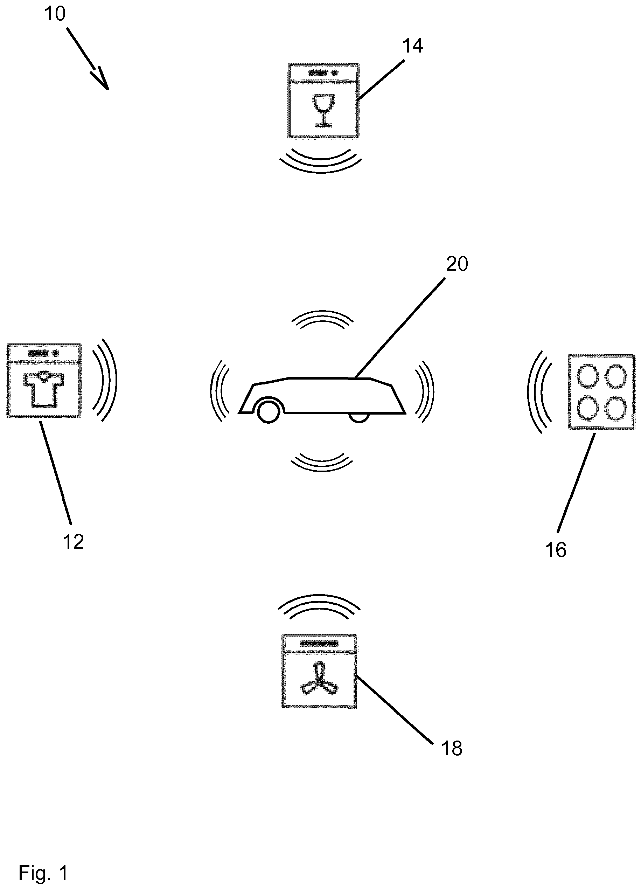

Die Darstellung in Figur 1 zeigt in schematisch stark vereinfachter Form ein im Folgenden mitunter auch nur kurz als System 10 bezeichnetes Haushaltegerätesystem 10. Das System 10 umfasst zumindest ein ortsfestes Haushaltsgerät 12, beim dargestellten Szenario exemplarisch vier Haushaltsgeräte 12, 14, 16, 18, nämlich einen Waschautomaten 12, einen Geschirrspüler 14, ein Kochfeld 16 und einen Herd 18, sowie ein mobiles Haushaltsgerät 20. Das mobile Haushaltsgerät 20 ist exemplarisch als Saugroboter 20 gezeigt und die nachfolgende Beschreibung wird - ohne Verzicht auf eine weitergehende Allgemeingültigkeit - am Beispiel eines Saugroboters 20 als mobilem Haushaltsgerät 20 fortgesetzt. Anstelle der vorgenannten Haushaltsgeräte 12-18 kommen auch andere Haushaltsgeräte in Betracht, allerdings ist die Art des jeweiligen Haushaltsgeräts 12-18 nicht von besonderer Bedeutung, so dass auf solche Geräte im Folgenden allgemein als Haushaltsgerät 12-18 Bezug genommen wird und darunter jede Art von Haushaltsgerät zu verstehen ist.

Das mobile Haushaltsgerät 20, hier also der Saugroboter 20, ist mit zumindest einem ortsfesten Haushaltsgerät 12-18 des Systems 10 leitungslos kommunikativ verbunden. Dies ist in der Darstellung in Figur 1 durch die von den einzelnen Geräten 12-18,20 ausgehenden Wellenfronten gezeigt. Mittel zur leitungslosen kommunikativen Verbindung zweier oder mehrerer Geräte sind in Form entsprechender Sende- und/oder Empfangseinrichtungen an sich bekannt.

Aufgrund der leitungslosen kommunikativen Verbindung zwischen dem Saugroboter 20 und einem der Haushaltsgeräte 12-18 oder mehreren Haushaltsgeräten 12-18 können das mobile Haushaltsgerät 20 und zumindest ein ortsfestes Haushaltsgerät 12-18 Daten austauschen. Selbstverständlich ist es dafür nicht erforderlich, dass sich der Saugroboter 20 - wie dies in der schematisch vereinfachten Darstellung in Figur 1 gezeigt ist - zwischen allen von dem Haushaltsgerätesystem 10 umfassten Haushaltsgeräten 12-18 befindet. Darüber hinaus können sich zwischen einem ortsfesten Haushaltsgerät 12-18 und dem Saugroboter 20 auch in der Darstellung in Figur 1 nicht gezeigte Hindernisse, zum Beispiel Einrichtungsgegenstände einer Küche oder eines Wohnraums, befinden, ohne dass dadurch die leitungslose kommunikative Verbindung zwischen dem jeweiligen ortsfesten Haushaltsgerät 12-18 und dem Saugroboter 20 infrage gestellt wäre.

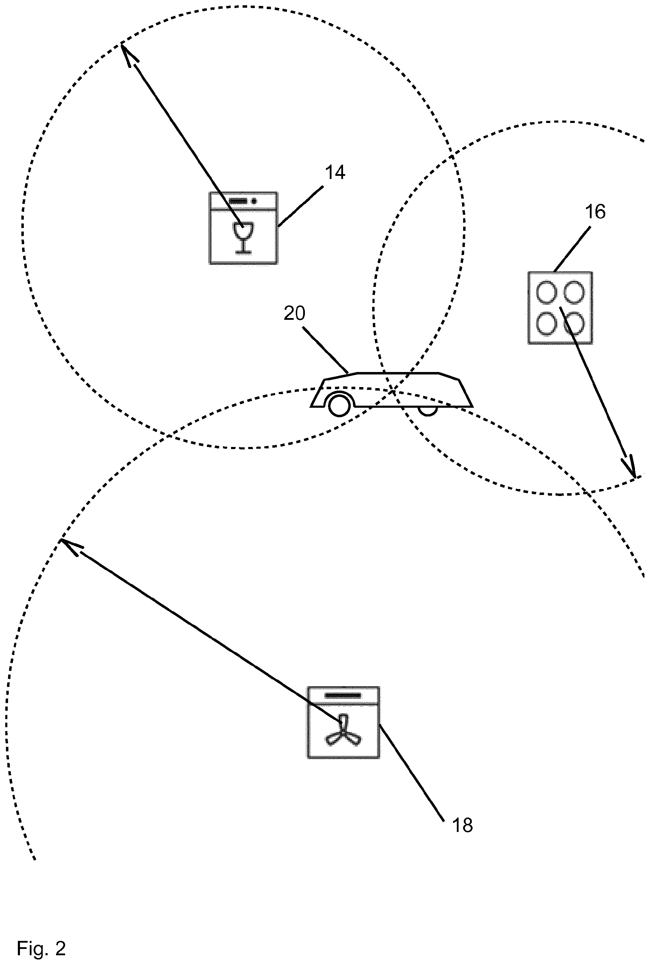

Die Darstellung in Figur 2 zeigt in schematisch vereinfachter Form die Positionsbestimmung des Saugroboters 20 anhand bekannter Positionen einzelner ortsfester Haushaltsgeräte 12-18. Der Saugroboter 20 ermittelt - zum Beispiel anhand einer Signallaufzeit eines von einem ortsfesten Haushaltsgerät 12-18 zum Saugroboter 20 übertragenen Datenpakets - einen Abstand zu dem jeweiligen Haushaltsgerät 12-18. Die Abstände sind in der Darstellung in Figur 2 durch die jeweils von einem der Haushaltsgeräte 12-18 ausgehenden und in einen Kreis um das Haushaltsgerät 12-18 eingeschriebenen Pfeile verdeutlicht.

Anhand zumindest dreier auf diese Weise ermittelter Abstände zu jeweils einem ortsfesten Haushaltsgerät 12-18 sowie der Position der jeweiligen Haushaltsgeräte 12-18 kann der Saugroboter 20 mittels einer davon umfassten Steuereinheit seine Position im Raum bestimmen. Die ortsfesten Haushaltsgeräte 12-18 werden dabei als feste Referenzpunkte betrachtet und als sogenannte anchor nodes für die Positionsbestimmung (Lokalisierung) des Saugroboters 20 verwendet. Mittels der von dem Saugroboter 20 umfassten Steuereinheit wird zum Beispiel unter Verwendung grundsätzlich an sich bekannter Triangulationsalgorithmen automatisch die Position des Saugroboters 20 bestimmt. Alternativ kann auch vorgesehen sein, dass die Position des Saugroboters 20 mittels einer von einem der ortsfesten Haushaltsgeräte 12-18 umfassten Steuereinheit ermittelt und anschließend auf leitungslosem Wege an den Saugroboter 20 übertragen wird.

Die ermittelte Positionsinformation kann zum Beispiel verwendet werden, um eine auf anderem Wege erhaltene Positionsinformation zu korrigieren, zum Beispiel eine nach dem Verlassen der Ladestation aufgrund der Bewegungen der Räder des Saugroboters 20 nachgeführte Positionsinformation. Zusätzlich oder alternativ kann die ermittelte Positionsinformation auch zur Erfassung und/oder Übermittlung raum- und/oder positionsspezifischer Saugparameter verwendet werden. Dazu zählen zum Beispiel Informationen über die Reinigungshäufigkeit eines Raums, eines Raumabschnitts oder einer Position im Raum, die zum Beispiel für statistische Zwecke erfasst werden, oder Informationen über einen an einer bestimmten Position gegebenen Bodenbelag, die auf leitungslosem Wege an den Saugroboter 20 übermittelt werden, woraufhin dieser den Saugbetrieb automatisch an den jeweiligen Bodenbelag anpasst.

Mit dem hier beschriebenen Ansatz ist es erstmals möglich, in einem Haushalt ohnehin vorhandene Haushaltsgeräte 12-18, insbesondere ortsfeste Haushaltsgeräte 12-18, für eine Bedienung eines mobilen Haushaltsgeräts 20 zu verwenden. Der Begriff Bedienung ist dabei insbesondere anhand der vorstehend erläuterten Beispiele weit auszulegen und die jetzt mögliche Bedienung basiert auf einer bidirektionalen leitungslosen Kommunikation zwischen einem mobilen Haushaltsgerät 20, zum Beispiel einem Saugroboter 20, und zumindest einem ortsfesten Haushaltsgerät 12-18.

Mit dem hier beschriebenen Ansatz wird zum Beispiel auch eine Betriebsart möglich, bei dem der Saugroboter 20 über davon umfasste Sensoren, zum Beispiel Entfernungssensoren oder Kontaktsensoren, Veränderungen im jeweils bearbeiteten Raum wahrnimmt. Wenn der Benutzer des Saugroboters 20 über eines der Haushaltsgeräte 12-18 einstellt, dass er für längere Zeit abwesend ist, überprüft der Saugroboter 20 beim Saugbetrieb während der Abwesenheit des Benutzers, ob Veränderungen an der räumlichen Umgebung aufgetreten sind. Detektiert der Saugroboter 20 mittels seiner Sensorik eine solche Veränderung, kann auf einen unbefugten Zutritt geschlossen werden. Der Saugroboter 20 generiert dann eine diesbezügliche Nachricht. Diese wird vom Saugroboter 20 zunächst auf leitungslosem Wege zu einem der ortsfesten Haushaltsgeräte 12-18 übermittelt. Von diesem wird die Nachricht weitergeleitet, zum Beispiel ins Internet oder an ein mit dem Internet verbundenes Gerät, zum Beispiel einen in dem Haushalt befindlichen Personalcomputer. Jedenfalls wird die ursprünglich vom Saugroboter 20 aufgrund der detektierten Veränderungen an der räumlichen Umgebung generierte und innerhalb des Haushalts vom Saugroboter 20 an zumindest eines der ortsfesten Haushaltsgeräte 12-18 übermittelte Nachricht an den Benutzer weitergeleitet, so dass dieser entsprechende Maßnahmen einleiten kann.

### Bezugszeichenliste

- 10: System, Haushaltsgerätesystem
- 12: ortsfestes Haushaltsgerät (Waschautomat)
- 14: ortsfestes Haushaltsgerät (Geschirrspüler)
- 16: ortsfestes Haushaltsgerät (Kochfeld)
- 18: ortsfestes Haushaltsgerät (Herd)
- 20: mobiles Haushaltsgerät (Saugroboter)

## Patentansprüche

1. Verfahren zum Betrieb eines zumindest drei ortsfeste Haushaltsgeräte (12-18) und ein mobiles Haushaltsgerät (20) umfassenden Systems (10),
wobei das mobile Haushaltsgerät (20) mit den zumindest drei ortsfesten Haushaltsgeräten (12-18) des Systems (10) leitungslos kommunikativ verbunden ist;
**dadurch gekennzeichnet, dass** das mobile Haushaltsgerät (20) und zumindest drei ortsfeste Haushaltsgeräte (12-18) leitungslos Daten austauschen und;
das mobile Haushaltsgerät (20) eine Positionsbestimmung mittels der von mindestens drei ortsfesten Haushaltsgeräten (12-18) leitungslos empfangenen Daten durchführt.

2. Betriebsverfahren nach Anspruch 1, wobei ein ortsfestes Haushaltsgerät (12-18) des Systems (10) als Benutzerschnittstelle für das mobile Haushaltsgerät (20) fungiert.

3. Betriebsverfahren nach Anspruch 2, wobei das mobile Haushaltsgerät (20) eine Statusinformation an das als Benutzerschnittstelle fungierende ortsfeste Haushaltsgerät (12-18) sendet und das als Benutzerschnittstelle fungierende ortsfeste Haushaltsgerät (12-18) die empfangene Statusinformation mittels einer von dem als Benutzerschnittstelle fungierenden ortsfesten Haushaltsgerät (12-18) umfassten Anzeigeeinrichtung ausgibt.

4. Betriebsverfahren nach Anspruch 2 oder 3, wobei mittels eines von dem als Benutzerschnittstelle fungierenden ortsfesten Haushaltsgerät (12-18) umfassten Bedienelements eine Bedienhandlung eines Benutzers erfasst wird und das als Benutzerschnittstelle fungierende ortsfeste Haushaltsgerät (12-18) eine in Bezug auf die Bedienhandlung automatisch generierte Steuerinformation an das mobile Haushaltsgerät (20) sendet.

5. Betriebsverfahren nach einem der vorangehenden Ansprüche, wobei ein ortsfestes Haushaltsgerät (12-18) des Systems (10) als Gateway für das mobile Haushaltsgerät (20) fungiert.

6. Betriebsverfahren nach einem der vorangehenden Ansprüche, wobei das mobile Haushaltsgerät (20) mit zumindest einem davon umfassten Sensor, insbesondere einem Temperatur- und/oder Feuchtigkeitssensor, seine Umgebung überwacht und im Falle eines einen vorgegebenen oder vorgebbaren Schwellwert überschreitenden Ausgangssignals des Sensors ein dem Sensor in einer Konfiguration des mobilen Haushaltsgeräts (20) zugeordnetes ortsfestes Haushaltsgerät (12-18) abschaltet.

7. Betriebsverfahren nach Anspruch 6, wobei die Schwellwertüberwachung zusammen mit einer abstandsbezogenen Plausibilitätskontrolle durchgeführt wird.

8. Haushaltsgerätesystem (10) mit zumindest drei ortsfesten Haushaltsgeräten (12-18) und zumindest einem mobilen Haushaltsgerät (20), wobei die zumindest drei ortsfesten Haushaltsgeräte (12-18) und das zumindest eine mobile Haushaltsgerät (20) Sende- und/oder Empfangseinrichtungen zur leitungslosen kommunikativen Verbindung umfassen, und **dadurch gekennzeichnet, dass** das mobile Haushaltsgerät (20) dazu eingerichtet ist, eine Positionsbestimmung mittels der von mindestens drei ortsfesten Haushaltsgeräten (12-18) leitungslos empfangenen Daten durchzuführen.

9. Haushaltsgerätesystem (10) nach Anspruch 8, wobei ein ortsfestes Haushaltsgerät (12-18) des Systems (10) als Benutzerschnittstelle für das mobile Haushaltsgerät (20) fungiert.

10. Haushaltsgerätesystem (10) nach Anspruch 9, wobei das mobile Haushaltsgerät (20) dazu eingerichtet ist, eine Statusinformation an das als Benutzerschnittstelle fungierende ortsfeste Haushaltsgerät (12-18) zu senden, und das als Benutzerschnittstelle fungierende ortsfeste Haushaltsgerät (12-18) dazu eingerichtet ist, die empfangene Statusinformation mittels einer von dem als Benutzerschnittstelle fungierenden ortsfesten Haushaltsgerät (12-18) umfassten Anzeigeeinrichtung auszugeben.

11. Haushaltsgerätesystem (10) nach Anspruch 9 oder 10, wobei das als Benutzerschnittstelle fungierende ortsfeste Haushaltsgerät (12-18) dazu eingerichtet ist, mittels eines von dem als Benutzerschnittstelle fungierenden ortsfesten Haushaltsgerät (12-18) umfassten Bedienelements eine Bedienhandlung eines Benutzers zu erfassen und eine in Bezug auf die Bedienhandlung automatisch generierte Steuerinformation an das mobile Haushaltsgerät (20) zu senden.

12. Haushaltsgerätesystem (10) nach einem der Ansprüche 8 bis 11, wobei ein ortsfestes Haushaltsgerät (12-18) des Systems (10) als Gateway für das mobile Haushaltsgerät (20) fungiert.

13. Haushaltsgerätesystem (10) nach einem der Ansprüche 8 bis 12, wobei das mobile Haushaltsgerät (20) einen Sensor, insbesondere einem Temperatur- und/oder Feuchtigkeitssensor, umfasst, und dazu eingerichtet ist, seine Umgebung zu überwachen und im Falle eines einen vorgegebenen oder vorgebbaren Schwellwert überschreitenden Ausgangssignals des Sensors ein dem Sensor in einer Konfiguration des mobilen Haushaltsgeräts (20) zugeordnetes ortsfestes Haushaltsgerät (12-18) abzuschalten.

14. Haushaltsgerätesystem (10) nach Anspruch 13, wobei die Schwellwertüberwachung zusammen mit einer abstandsbezogenen Plausibilitätskontrolle durchgeführt wird.

15. Haushaltsgerätesystem (10) nach einem der Ansprüche 8 bis 14, wobei das mobile Haushaltsgerät (20) ein Saugroboter ist.

## Claims

1. Method for operating a system (10) comprising at least three stationary domestic appliances (12-18) and a mobile domestic appliance (20), the mobile domestic appliance (20) being connected to the at least three stationary domestic appliances (12-18) of the system (10) for wireless communication,
**characterised in that** the mobile domestic appliance (20) and at least three stationary domestic appliances (12-18) exchange data wirelessly, and
the mobile domestic appliance (20) carries out position determination by means of the data received wirelessly from at least three stationary domestic appliances (12-18).

2. Operating method according to claim 1, wherein one stationary domestic appliance (12-18) of the system (10) acts as a user interface for the mobile domestic appliance (20).

3. Operating method according to claim 2, wherein the mobile domestic appliance (20) sends status information to the stationary domestic appliance (12-18) which acts as the user interface, and the stationary domestic appliance (12-18) which acts as the user interface outputs the received status information by means of a display device comprised by the stationary domestic appliance (12-18) which acts as the user interface.

4. Operating method according to either claim 2 or claim 3, wherein a control action by a user is detected by means of a control element comprised by the stationary domestic appliance (12-18) which acts as the user interface, and the stationary domestic appliance (12-18) which acts as the user interface sends control information which is automatically generated with regard to the control action to the mobile domestic appliance (20).

5. Operating method according to any of the preceding claims, wherein a stationary domestic appliance (12-18) of the system (10) acts as a gateway for the mobile domestic appliance (20).

6. Operating method according to any of the preceding claims, wherein the mobile domestic appliance (20) monitors its surroundings by means of at least one sensor comprised by said appliance, in particular a temperature and/or moisture sensor, and, in the event that an output signal from the sensor exceeds a predetermined or predeterminable threshold value, switches off a stationary domestic appliance (12-18) which is associated with the sensor in one configuration of the mobile domestic appliance (20).

7. Operating method according to claim 6, wherein the threshold value is monitored together with a distance-related plausibility check.

8. Domestic appliance system (10) having at least three stationary domestic appliances (12-18) and at least one mobile domestic appliance (20), the at least three stationary domestic appliances (12-18) and the at least one mobile domestic appliance (20) comprising transmitting and/or receiving devices for the wireless communication connection, and **characterised in that** the mobile domestic appliance (20) is designed to carry out position determination by means of the data received wirelessly from at least three stationary domestic appliances (12-18).

9. Domestic appliance system (10) according to claim 8, wherein one stationary domestic appliance (12-18) of the system (10) acts as a user interface for the mobile domestic appliance (20).

10. Domestic appliance system (10) according to claim 9, wherein the mobile domestic appliance (20) is designed to send status information to the domestic appliance (12-18) which acts as the user interface, and the stationary domestic appliance (12-18) which acts as the user interface is designed to output the received status information by means of a display device comprised by the stationary domestic appliance (12-18) which acts as the user interface.

11. Domestic appliance system (10) according to either claim 9 or claim 10, wherein the stationary domestic appliance (12-18) which acts as a user interface is designed to detect a control action by a user by means of a control element comprised by the stationary domestic appliance (12-18) which acts as the user interface, and to send control information which is automatically generated with regard to the control action to the mobile domestic appliance (20).

12. Domestic appliance system (10) according to any of claims 8 to 11, wherein a stationary domestic appliance (12-18) of the system (10) acts as a gateway for the mobile domestic appliance (20).

13. Domestic appliance system (10) according to any of claims 8-12, wherein the mobile domestic appliance (20) comprises a sensor, in particular a temperature and/or moisture sensor, and is designed to monitor its surroundings and, in the event that an output signal from the sensor exceeds a predetermined or predeterminable threshold value, to switch off a stationary domestic appliance (12-18) which is associated with the sensor in one configuration of the mobile domestic appliance (20).

14. Domestic appliance system (10) according to claim 13, wherein the threshold is monitored together with a distance-related plausibility check.

15. Domestic appliance system (10) according to any of claims 8 to 14, wherein the mobile domestic appliance (20) is a robotic vacuum cleaner.

## Revendications

1. Procédé pour faire fonctionner un système (10) comprenant au moins trois appareils ménagers fixes (12 à 18) et un appareil ménager mobile (20),
l'appareil ménager mobile (20) étant relié de manière communicative sans fil avec les au moins trois appareils ménagers fixes (12 à 18) du système (10) ;
**caractérisé en ce que** l'appareil ménager mobile (20) et au moins trois appareils ménagers fixes (12 à 18) échangent des données sans fil et ;
l'appareil ménager mobile (20) effectue une détermination de position au moyen des données reçues sans fil par au moins trois appareils ménagers fixes (12 à 18).

2. Procédé de fonctionnement selon la revendication 1, dans lequel un appareil ménager fixe (12 à 18) du système (10) sert d'interface utilisateur pour l'appareil ménager mobile (20).

3. Procédé de fonctionnement selon la revendication 2, dans lequel l'appareil ménager mobile (20) envoie une information d'état à l'appareil ménager fixe (12 à 18) servant d'interface utilisateur, et l'appareil ménager fixe (12 à 18) servant d'interface utilisateur diffuse les informations d'état reçues au moyen d'un dispositif d'affichage comprenant l'appareil ménager fixe (12 à 18) servant d'interface utilisateur.

4. Procédé de fonctionnement selon la revendication 2 ou 3, dans lequel une opération de commande d'un utilisateur est détectée au moyen d'un élément de commande compris dans l'appareil ménager fixe (12 à 18) servant d'interface utilisateur, et l'appareil ménager fixe (12 à 18) servant d'interface utilisateur envoie à l'appareil ménager mobile (20) des informations de commande générées automatiquement concernant l'opération de commande.

5. Procédé de fonctionnement selon l'une des revendications précédentes, dans lequel un appareil ménager fixe (12 à 18) du système (10) sert de passerelle pour l'appareil ménager mobile (20).

6. Procédé de fonctionnement selon l'une des revendications précédentes, dans lequel l'appareil ménager mobile (20) surveille son environnement à l'aide d'au moins un capteur, en particulier un capteur de température et/ou d'humidité, et dans le cas où un signal de sortie du capteur dépasse une valeur seuil prédéterminée ou prédéfinissable, un appareil ménager fixe (12 à 18) associé au capteur dans une configuration de l'appareil ménager mobile (20) est désactivé.

7. Procédé de fonctionnement selon la revendication 6, dans lequel la surveillance de la valeur seuil est effectuée en même temps qu'un contrôle de vraisemblance en fonction de la distance.

8. Système d'appareils ménagers (10) comportant au moins trois appareils ménagers fixes (12 à 18) et au moins un appareil ménager mobile (20), dans lequel lesdits au moins trois appareils ménagers fixes (12 à 18) et l'au moins un appareil ménager mobile (20) comprennent des moyens d'émission et/ou de réception pour la liaison de communication sans fil, et **caractérisé en ce que** l'appareil ménager mobile (20) est conçu pour effectuer une détermination de position au moyen des données reçues sans fil d'au moins trois appareils ménagers fixes (12 à 18).

9. Système d'appareils ménagers (10) selon la revendication 8, dans lequel un appareil ménager fixe (12 à 18) du système (10) sert d'interface utilisateur pour l'appareil ménager mobile (20).

10. Système d'appareils ménagers (10) selon la revendication 9, dans lequel l'appareil ménager mobile (20) est conçu pour envoyer une information d'état à l'appareil ménager fixe (12 à 18) servant d'interface utilisateur, et l'appareil ménager fixe (12 à 18) servant d'interface utilisateur est conçu pour diffuser les informations d'état reçues au moyen d'un dispositif d'affichage comprenant l'appareil ménager fixe (12 à 18) servant d'interface utilisateur.

11. Système d'appareils ménagers (10) selon la revendication 9 ou 10, dans lequel l'appareil ménager fixe (12 à 18) servant d'interface utilisateur est conçu pour détecter une opération de commande d'un utilisateur au moyen d'un élément de commande compris dans l'appareil ménager fixe (12 à 18) servant d'interface utilisateur, et pour envoyer à l'appareil ménager mobile (20) des informations de commande générées automatiquement concernant l'opération de commande.

12. Système d'appareils ménagers (10) selon l'une des revendications 8 à 11, dans lequel un appareil ménager fixe (12 à 18) du système (10) sert de passerelle pour l'appareil ménager mobile (20).

13. Système d'appareils ménagers (10) selon l'une des revendications 8 à 12, dans lequel l'appareil ménager mobile (20) comprend un capteur, en particulier un capteur de température et/ou d'humidité, et est conçu pour surveiller son environnement, et pour désactiver un appareil ménager fixe (12 à 18) associé au capteur dans une configuration de l'appareil ménager mobile (20) dans le cas où un signal de sortie du capteur dépasse une valeur seuil prédéterminée ou prédéfinissable.

14. Système d'appareils ménagers (10) selon la revendication 13, dans lequel la surveillance de la valeur seuil est effectuée conjointement avec un contrôle de vraisemblance en fonction de la distance.

15. Système d'appareils ménagers (10) selon l'une des revendications 8 à 14, dans lequel l'appareil ménager mobile (20) est un robot aspirateur.
